# EUROPEAN PATENT SPECIFICATION

(11) **EP 3 722 982 B1**
(45) Date of publication and mention of the grant of the patent: **26.05.2021**
(21) Application number: 20164525.6
(22) Date of filing: 20.03.2020
(51) Int. Cl.: G06F 21/60, H04L 29/06, G06F 21/62

(54) **DEVICE AND METHOD FOR PROCESSING ATTRIBUTE INFORMATION**
VORRICHTUNG UND VERFAHREN ZUR VERARBEITUNG VON ATTRIBUTINFORMATIONEN
DISPOSITIF ET PROCÉDÉ DE TRAITEMENT DES INFORMATIONS D'ATTRIBUTS

(30) Priority: 09.04.2019 JP 2019073907
(43) Date of publication of application: 14.10.2020
(73) Proprietor: FUJITSU LIMITED, Kanagawa 211-8588 (JP)
(72) Inventor: Horii, Motoshi, Kanagawa, 211-8588 (JP)
(74) Representative: Hoffmann Eitle

(56) References cited:
- US-A1- 2014 188 991
- HONGXIN HU ET AL: "Multiparty Access Control for Online Social Networks: Model and Mechanisms", IEEE TRANSACTIONS ON KNOWLEDGE AND DATA ENGINEERING, IEEE SERVICE CENTER, LOS ALAMITOS, CA, US, vol. 25, no. 7, July 2013 (2013-07), pages 1614-1627, XP011510877, ISSN: 1041-4347, DOI: 10.1109/TKDE.2012.97
- HONGXIN HU ET AL: "Multiparty Authorization Framework for Data Sharing in Online Social Networks", 11 July 2011 (2011-07-11), DATA AND APPLICATIONS SECURITY AND PRIVACY XXV, SPRINGER BERLIN HEIDELBERG, BERLIN, HEIDELBERG, PAGE(S) 29 - 43, XP047025417, ISBN: 978-3-642-22347-1 * section 3 *

## Description

### FIELD

The embodiments discussed herein are related to a device and a method for processing attribute information.

### BACKGROUND

When judging the credibility of an individual using a computer, a reference is made to the attribute information of the target person. The attribute information may include the target person's name, age, residential address, phone number, e-mail address, occupation, and the like. In this case, the computer estimates the credibility of the target person and executes an action according to the result of the estimation. For example, when the credibility of the target person is estimated to be high, the computer discloses specified information to the target person.

As a related art, a method has been proposed in which, when there is an information disclosure request from a first user for personal information relating to a second user who is in a relationship with the first user in which there is one or more persons between the first user and the second user, a reference is made to the access control rule and the list of user relationships to decide whether or not to permit the information disclosure to the first user (for example, Japanese Laid-Open Patent Publication No. 2015-201073). Meanwhile, a printing device has been known that prints and outputs personal information according to a specified format (for example, Japanese Laid-Open Patent Publication NO. 2008-250916).

In the estimation of credibility mentioned above, the attribute information may include information of a third person. For example, the target person that receives a request for the attribute information from a server computer transmits the attribute information of the target person himself/herself to the server computer. At this time, in a case in which the attribute information includes information relating to a third person, the third person may suffer a disadvantage. This problem is not limited to personal information but may also arise with regard to information relating to various entities (individuals, organizations, IoT devices as well as services).

It is an object of the present invention to provide a method for protecting attribute information on a network.

US2014/0188991 A1 discloses a method for authorising third party profile data sharing.

### SUMMARY

The invention is defined by claims 1, 5 and 6.

According to an aspect of the embodiments, an information processing device provides a function of a first agent corresponding to a first entity in a communication system in which a plurality of agents respectively manage attribute information of corresponding entities. The information processing device includes: a processor; and a memory configured to store attribute information that indicates an attribute of the first entity. The processor decides whether the attribute information includes information relating to a third entity when the information processing device receives an attribute request from a second agent corresponding to a second entity. The processor edits the attribute information based on a policy of the third entity with respect to a disclosure of the information relating to the third entity when the attribute information includes the information relating to the third entity. The processor transmits the edited attribute information to the second agent.

### BRIEF DESCRIPTION OF DRAWINGS

FIG.1 illustrates an example of the transmission of attribute information;
FIG.2 illustrates another example of the transmission of attribute information;
FIG.3 illustrates an example of a method for processing attribute information;
FIG.4 illustrates an example of a communication system;
FIG.5A through FIG.5C illustrate an example of attribute information;
FIG.6A through FIG.6C illustrate an example of policy information;
FIG.7 illustrates an example of a request phase;
FIG.8 and FIG.9 illustrate an example of an inquiry phase;
FIG.10 illustrates an example of a response phase;
FIG.11 and FIG.12 illustrate another example of an inquiry phase;
FIG.13 illustrates another example of a response phase;
FIG.14 illustrates an example of a display phase;
FIG.15A and FIG.15B illustrate a graph displayed on a terminal device;
FIG.16 illustrates an example of a sequence of a method for processing attribute information;
FIG.17 illustrates another example of a sequence of a method for processing attribute information;
FIG.18 illustrates a flowchart illustrating an example of the processing of an agent;
FIG.19A and FIG.19B illustrate an example of a method for limiting a disclosure range;
FIG.20 illustrates an example of a method for detecting an unpermitted disclosure of attribute information;
FIG.21 illustrates an example of a method for making attribute information public; and
FIG.22 illustrates an example of the hardware configuration of an information processing device.

### DESCRIPTION OF EMBODIMENTS

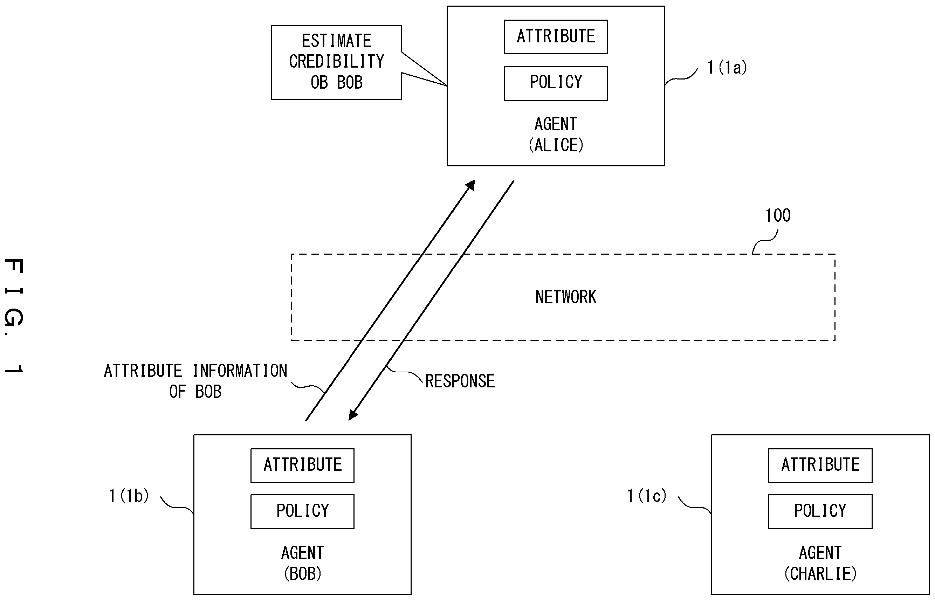

FIG.1 illustrates an example of the transmission of attribute information. In this example, a plurality of agents 1 (1a through 1c) exist in a communication system. Each of the agents 1 is realized by executing a software program using a processor. The software program includes a program for processing attribute information. Therefore, each of the agents 1 is able to provide a function for processing attribute information by executing the program for processing attribute program. In addition, each of the agents 1 is equipped with a function for connecting to a network 100.

Each of the agents 1 is provided for a corresponding entity. Here, the entity corresponds to an individual, an organization, an IoT device, a service, or the like. In this example, the entity respectively corresponds to an individual (Alice, Bob, Charlie, etc.). That is, the agents 1a, 1b, 1c execute information processing for Alice, Bob, Charlie, respectively.

The agent 1 manages attribute information and policy information of the corresponding entity. For example, the memory that is accessible from the agent 1a stores the attribute information and the policy information of Alice, and the memory that is accessible from the agent 1b stores the attribute information and the policy information of Bob. The attribute information corresponds to information that indicates attributes of the entity, and in this example, it indicates the personal information of the user. Therefore, the attribute information includes, for example, the user's name, age, residential address, phone number, e-mail address, occupation, personal relationship, and so on. The policy information indicates the range in which the attribute information may be disclosed. That is, the policy information specifies the parties to which the attribute information is permitted to be disclosed. In addition, in a case in which the attribute information includes a plurality of attributes, the policy information may also specify the attributes that are permitted to be disclosed.

Here, it is assumed that Bob requests a meeting with Alice. In this case, the agent 1b transmits the attribute information of Bob to the agent 1a according to the instruction from Bob. The agent 1a estimates the credibility of Bob according to the attribute information of Bob. Then, the agent 1a executes an action according to the estimation result. For example, when it is estimated that the credibility of Bob is high, the agent 1a transmits a message indicating a permission for the meeting to the agent 1b.

Meanwhile, in the case in which the user of the terminal device corresponding to the agent 1 is an "individual", the attribute information corresponds to personal information. In addition, while the user of the terminal device corresponding to agent 1 is an "individual" in this example, the present invention is not limited to this configuration. That is, the agent 1 may correspond to any entity (an individual, an organization, an IoT device, a service, or the like).

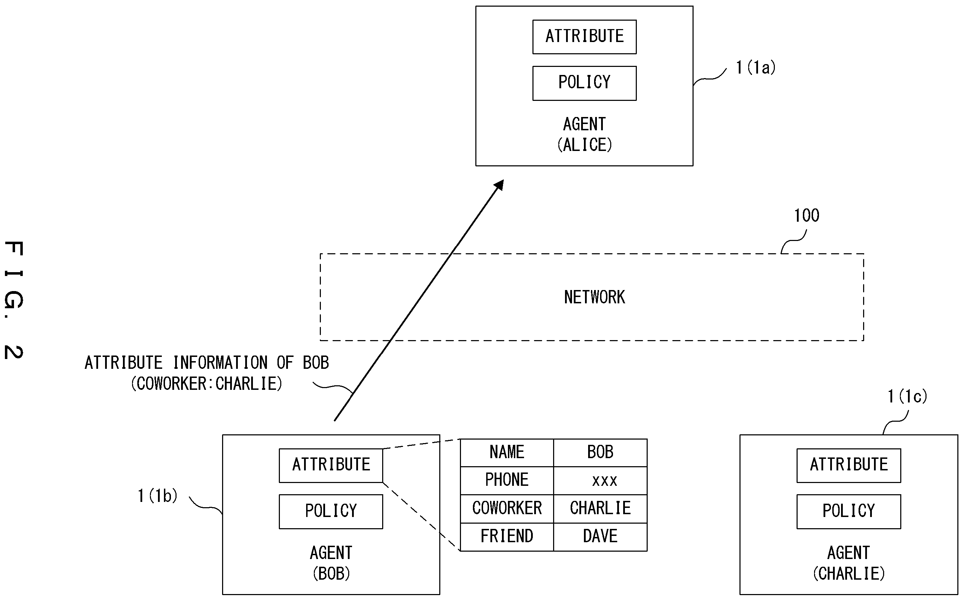

FIG.2 illustrates another example of the transmission of attribute information. In this example, the attribute information of Bob transmitted from the agent 1b to the agent 1a includes information relating to a third party. Specifically, the attribute information of Bob includes information indicating that Charlie is Bob's coworker.

The agent 1a estimates the credibility of Bob according to the attribute information received from the agent 1b. At this time, the agent 1a estimates the credibility of Bob taking it into consideration that Charlie is Bob's coworker. That is, the agent 1a is able to estimate the credibility of Bob in consideration with the personal relationship of Bob. Here, for example, in the case in which Charlie is a credible person for Alice, it might be estimated that Bob is also credible.

However, in this method, the personal information of Charlie is to be disclosed to Alice without Charlie's permission. At least the fact that Charlie belongs to the same organization as Bob is to be disclosed to Alice. That is, in this method, protection of the attribute information or the personal information may not be attained.

### Embodiments

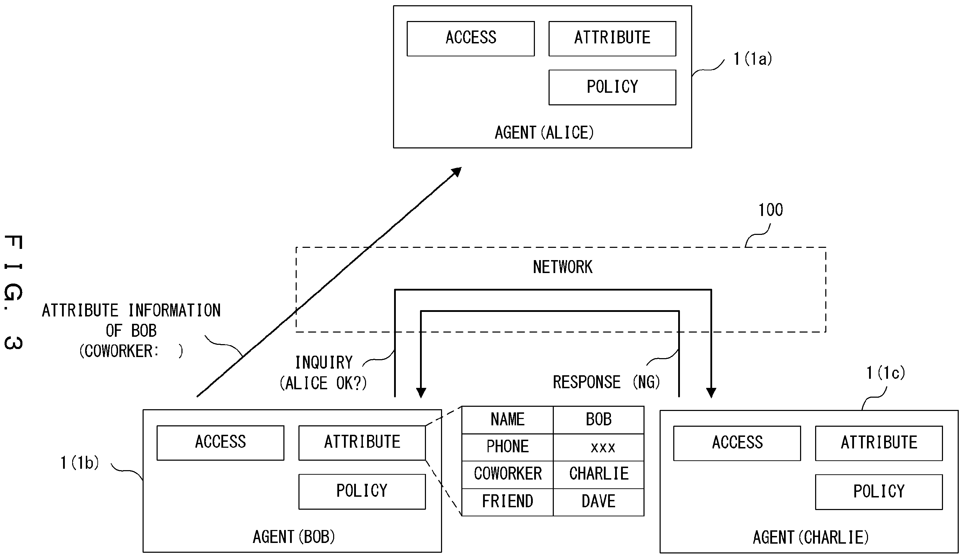

FIG.3 illustrates an example of a method for processing attribute information according to an embodiment of the present invention. The method provides a function for avoiding the situation in which personal information of a third party is disclosed without permission.

When transmitting the attribute information of Bob to the agent 1a, the agent 1b decides whether or not the attribute information includes information relating to a third party. The "third party" represents an entity that is not the user of the transmitting terminal from which the attribute information is transmitted (that is, Bob) or the user of the destination terminal to which the attribution information is transmitted (that is, Alice). In this example, the attribute information of Bob includes information relating to Charlie. Specifically, the attribute information of Bob includes information that indicates that Charlie is Bob's coworker. In this case, the agent 1b inquires of an agent of the Charlie (that is, the agent 1c) whether or not the information relating to Charlie may be disclosed to Alice.

Upon receiving the inquiry, the agent 1c refers to the policy information of Charlie and creates a response. Here, the entities to which the attribute information of Charlie is permitted to be disclosed are registered in the policy information managed by the agent 1c. However, in this example, it is assumed that "Alice" is not registered in the policy information. In this case, the agent 1c creates a response that indicates that the attribute information of Charlie is not to be disclosed to Alice. Then, the argent 1c transmits the response to the agent 1b.

The agent 1b edits the attribute information of Bob according to the response received from the agent 1c. Specifically, the agent 1b deletes the "information relating to Charlie" from the attribute information of Bob. Then, the agent 1b transmits the edited attribute information to the agent 1a. In this case, it is impossible for the agent 1a to recognize the existence of Charlie in the attribute information of Bob. That is, the personal information of Charlie is not disclosed to Alice. Meanwhile, when a response is received from the agent 1c indicating that the attribute information of Charlie is permitted to be disclosed to Alice, the agent 1b may transmit the attribute information of Bob to the agent 1a without editing.

As described above, in the method for processing attribute information, when the agent 1b transmits the attribute information of the user of the agent 1b to the agent 1a, the agent 1b decides whether or not the attribute information includes information relating to a third party. Then, when the attribute information includes information relating to a third party, the agent 1b inquires of the third party whether the information relating to the third party is permitted to be disclosed to the user of the agent 1a. Then, the agent 1b edits the attribute information according to the response from the third party and transmits the edited attribute information to the agent 1a. Therefore, the situation in which information relating to the third part is disclosed without permission from the third party is avoided. That is, the protection of attribute information or personal information is ensured.

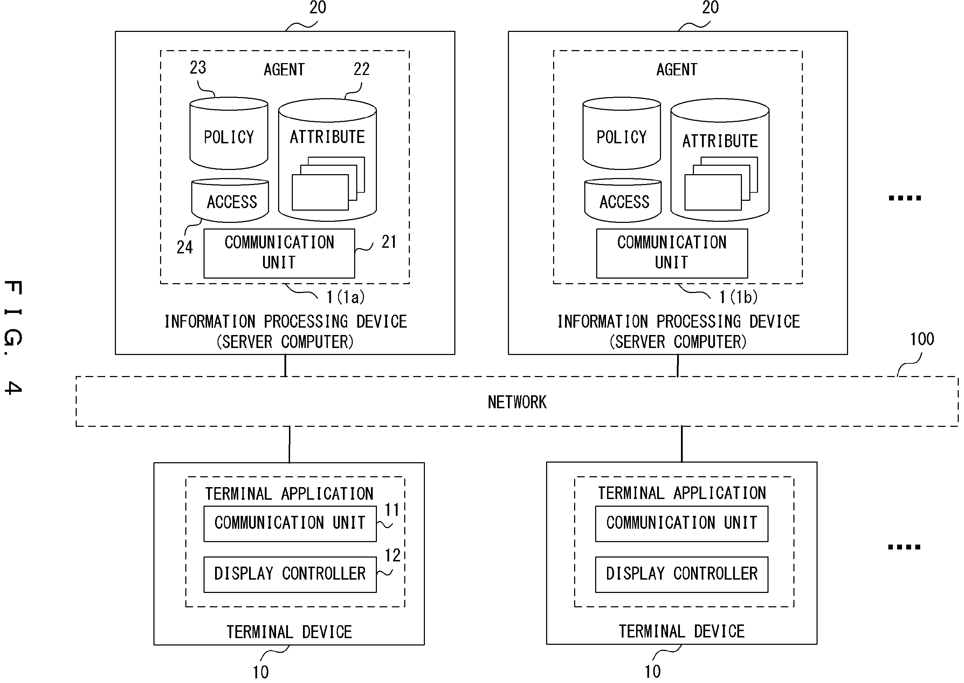

FIG.4 illustrates an example of a communication system according to an embodiment of the present invention. In this example, the communication system includes a plurality of terminal devices 10 and a plurality of information processing devices 20. Each of the terminal devices 10 and the information processing devices 20 connects to a network 100.

The terminal device 10 is, in this example, used by a user. In addition, the terminal device 10 is equipped with a processor, a memory, a communication circuit, a display device, a user interface, and so on, while they are not illustrated in the drawing. Further, a terminal application is implemented on the terminal device 10. The terminal application includes a communication unit 11 and a display controller 12. The communication unit 11 provides a communication function. The display controller 12 generates image data to be displayed on the display device. The terminal application is executed by the processor.

The information processing device 20 operates as a server device in this example. In addition, the information processing device 20 is equipped with a processor, a memory, a communication circuit, and so on, while they are not illustrated in the drawing. Further, the agent 1 may be executed in the information processing device 20. Each of the agents 1 is provided for a corresponding entity. In this example, the agent 1 is provided for the user of a corresponding terminal device 10.

The agent 1 includes a communication unit 21. The communication unit 21 provides a communication function. In addition, the agent 1 manages attribute information 22 and policy information 23 of the corresponding user. The attribute information 22 represents the attributes of the corresponding user. In this example, the attribute information 22 represents the personal information of the corresponding user. Therefore, the attribute information 22 includes, for example, the user's name, age, residential address, phone number, e-mail address, occupation, personal relationship, and so on. The policy information 23 represents the range in which the attribute information 22 may be disclosed, as described above. Further, the agent 1 manages an access table 24. Information for identifying a correspondent node is registered in the access table 24.

In the communication system configured as described above, the terminal device 10 operates according to the instruction from the user. At this time, the terminal device 10 accesses the corresponding agent as needed. For example, when an instruction relating to the processing of attribute information is received from Alice, the terminal device 10 may request the agent corresponding to Alice (here, the agent 1a) to do the processing. In a similar manner, when an instruction relating to the attribute information processing is received from Bob, the terminal device 10 may request the agent corresponding to Bob (here, the agent 1b) to do the processing.

Meanwhile, while the agent 1 is implemented in the information processing device 20 in the example illustrated in FIG. 4, it may also be implemented in the terminal device 10. In addition, two or more agents may be implemented in one information processing device 20.

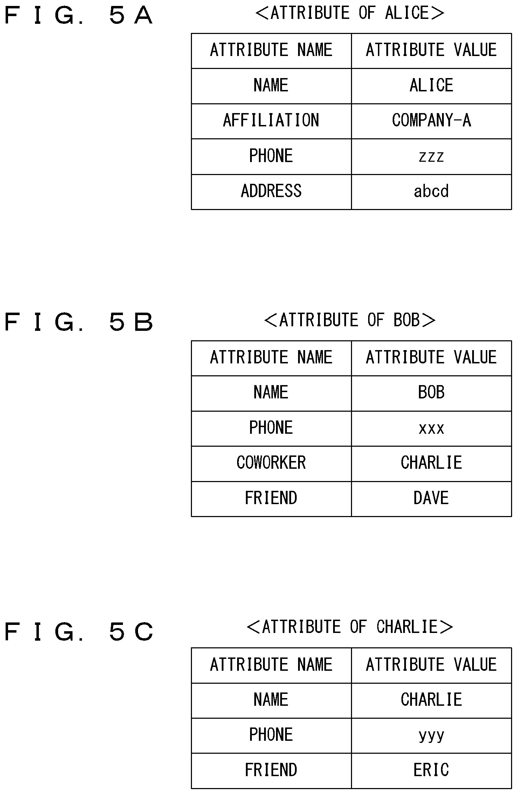

FIG.5A through FIG.5C illustrate an example of attribute information of each entity. FIG.5A represents the attribute information of Alice managed by the agent 1a. FIG.5B represents the attribute information of Bob managed by the agent 1b. FIG.5C represents the attribute information of Charlie managed by the agent 1c. The content of the attribute information is registered by each entity (that is, Alice, Bob, Charlie), for example.

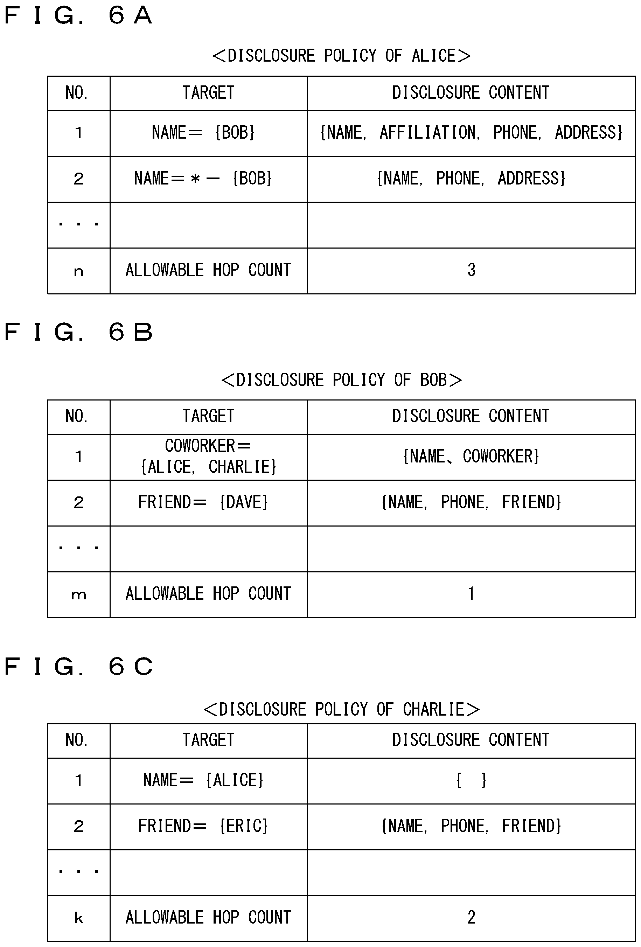

FIG.6A through FIG.6C illustrate an example of policy information of each entity. FIG. 6A represents the policy information of Alice managed by the agent 1a. FIG.6B represents the policy information of Bob managed by the agent 1b. FIG.6C represents the policy information of Charlie managed by the agent 1c. The content of the policy information is also registered by each entity (that is, Alice, Bob, Charlie), for example.

The policy information indicates the disclosure range (that is, the disclosure policy) of the attribute information. For example, the first record of the policy information of Alice presented in FIG.6A indicates that Alice's "name, affiliation, phone number, residential address" are permitted to be disclosed to "Bob". The second record indicates that Alice's "name, phone number, residential address" are permitted to be disclosed to "users other than Bob". In other words, the second record indicates that Alice's affiliation is not permitted to be disclosed to "users other than Bob". Meanwhile, "*" represents the set of all users, and "-" represents an operation for obtaining the difference of sets. Meanwhile, the "allowable hop count" is explained later.

The first record of the policy information of Charlie presented in FIG.6C indicates that the disclosure of the personal information of Charlie to "Alice" is not permitted. The second record indicates that Charlie's "name, phone number, friends" are permitted to be disclosed to "Eric".

Next, the procedures of the method for processing attribute information presented in FIG.3 is explained in detail. In this example, the method for processing attribute information includes a request phase, an inquiry phase, a response phase and a display phase. In the descriptions below, it is assumed that Alice presented in FIG.3 requests Bob for attribute information. Meanwhile, Alice or the agent 1a corresponding to Alice may be referred to as the "requesting party". In addition, Bob or the agent 1b corresponding to Bob may be referred to as the "target party". Further, the attribute information of Bob includes information relating to Charlie, and therefore, Charlie or the agent 1c corresponding to Charlie may be referred to as a "related party".

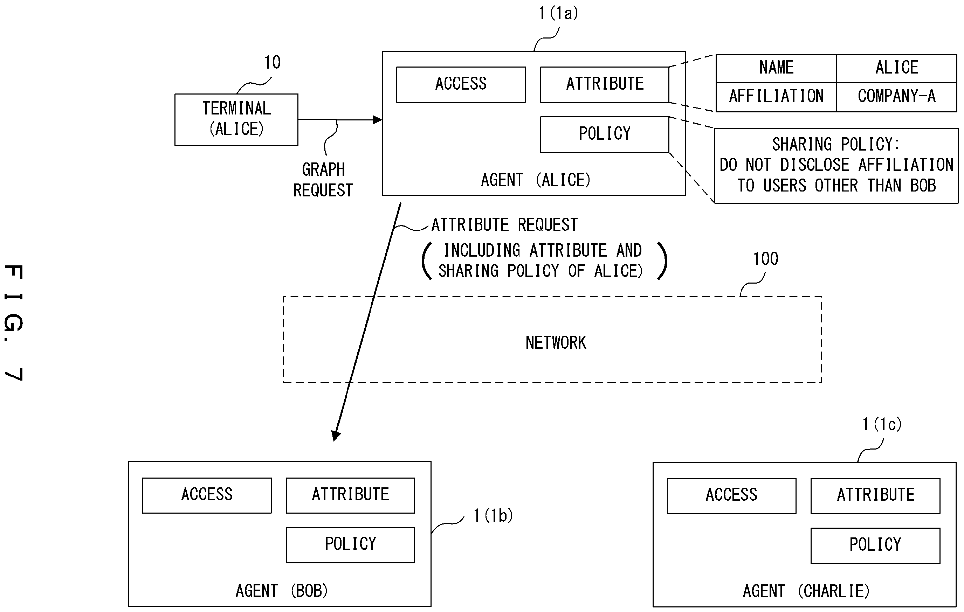

FIG. 7 illustrates an example of the request phase of method for processing attribute information. In the request phase, Alice inputs a graph request into the terminal device 10 of Alice. The graph request includes an instruction for obtaining the attribute information of the target person (that is, Bob) and for displaying it on the display device of the terminal device 10. Then, the terminal device 10 forwards the graph request to the agent 1a corresponding to Alice.

In response to the graph request, the agent 1a transmits an attribute request to the agent 1b corresponding to Bob. The attribute information and sharing policy information of the requesting party (that is, Alice) are attached to the attribute request. The attribute information and the sharing policy information of Alice are managed by the agent 1a. The attribute information of Alice includes information indicating Alice's name and the organization to which Alice belongs, as presented in FIGs.5A through 5C or in FIG.7. In addition, the sharing policy information indicates the disclosure range for each of the attributes in the attribute information of Alice. In this example, the sharing policy information indicates that "affiliation" in the attribute information of Alice is not permitted to be disclosed to an entity other than Bob.

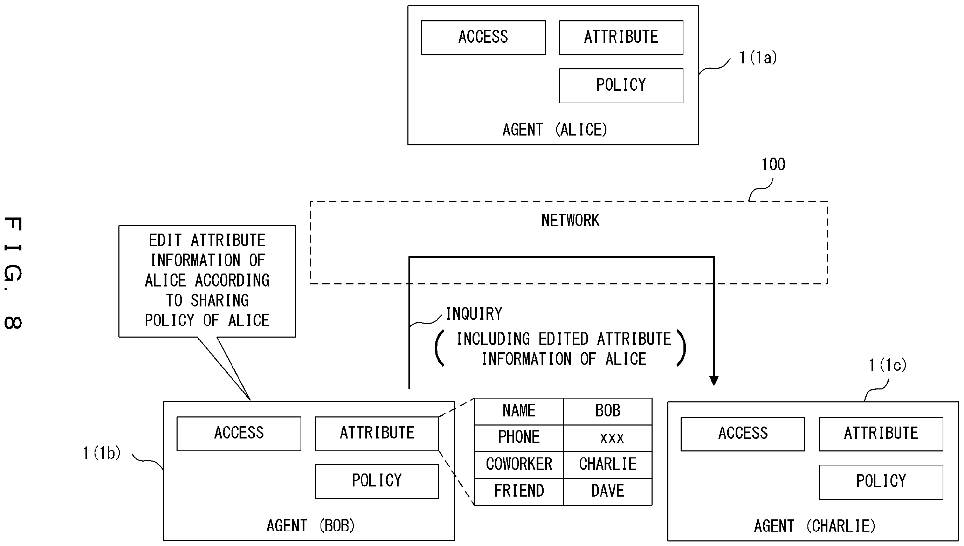

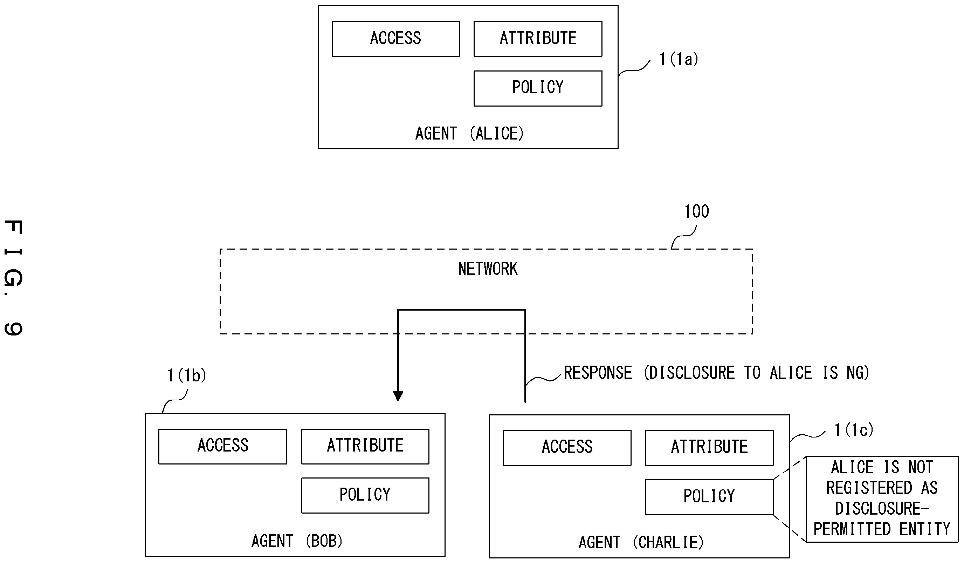

FIG.8 and FIG.9 illustrate an example of the inquiry phase of the method for processing attribute information. The inquiry phase starts when the agent 1b receives the attribute request presented in FIG.7 from the agent 1a.

The agent 1b decides whether or not to accept the request from Alice, according to Bob's policy. Here, the policy information representing Bob's policy is managed by the agent 1b. Then, as illustrated in FIGs.6A through 6C, the policy information of Bob indicates that the disclosure of the attribute information of Bob to Alice is permitted. Therefore, the agent 1b decides to accept the request from Alice.

Next, the agent 1b decides whether or not the attribute information of Bob includes information relating to a third party. In this example, as illustrated in FIGs. 5A through 5C or in FIG.8, the attribute information of Bob includes information relating to Charlie and information relating to Dave. In this case, the agent 1b performs an inquiry with each of the related party as to whether or not the information is permitted to be disclosed to Alice. Here, the inquiry to Charlie is described.

The agent 1b refers to the access table and obtains end point information for accessing Charlie. As a result, the agent corresponding to Charlie (that is, the agent 1c) is identified. Then, the agent 1b transmits an inquiry message to the agent 1c.

The inquiry message inquires whether or not the information relating to Charlie is permitted to be disclosed to Alice. Therefore, the inquiry message includes the attribute information of Alice in order to tell Charlie what kind of a person Alice is. However, the agent 1b edits the attribute information of Alice according to the sharing policy of Alice. In this example, the sharing policy of Alice is "regarding the affiliation of Alice, the disclosure to an entity other than Bob is not permitted." Therefore, the agent 1b deletes "Affiliation: Company-A" from the attribute information of Alice.

In addition, in the attribute information of Bob, the relationship between Bob and Charlie is "Coworker". Therefore, the inquiry message inquires whether or not "Charlie is Bob's coworker" is permitted to be disclosed to Alice.

Upon receiving the inquiry message from the agent 1b, the agent 1c refers to the policy information of Charlie and creates a response. Here, entities to which the attribute information of Charlie is permitted to be disclosed are registered in the policy information of Charlie managed by the agent 1c. However, in this example, "Alice" is not registered in the policy information. In this case, the agent 1c creates a response that indicates that the attribute information of Charlie is not to be disclosed to Alice. Then, the agent 1c transmits the response to the agent 1b.

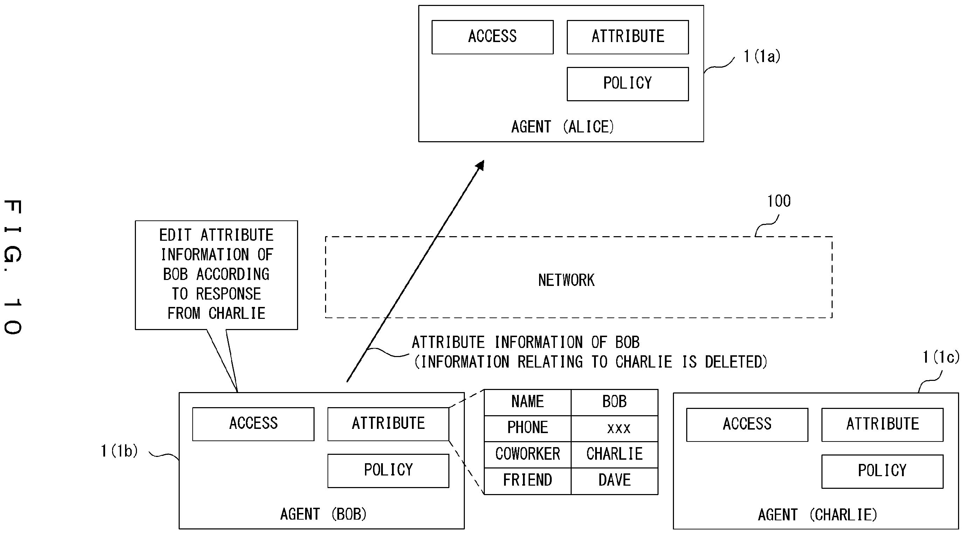

FIG.10 illustrates an example of the response phase of the method for processing attribute information. The response phase starts when the agent 1b receives the response illustrated in FIG. 9 from the agent 1c.

The agent 1b edits the attribute information of Bob according to the response received from each of the related party. In this example, the response transmitted from the agent 1c indicates that the attribute information of Charlie is not to be disclosed to Alice. In this case, the agent 1b deletes the information relating to Charlie from the attribute information of Bob. Specifically, "Coworker: Charlie" is deleted from the attribute information of Bob. Then, the agent 1b transmits the edited attributed information to the agent 1a. At this time, the agent 1a is not able to recognize the existence of Charlie in the attribute information of Bob. That is, the personal information of Charlie is not disclosed to Alice.

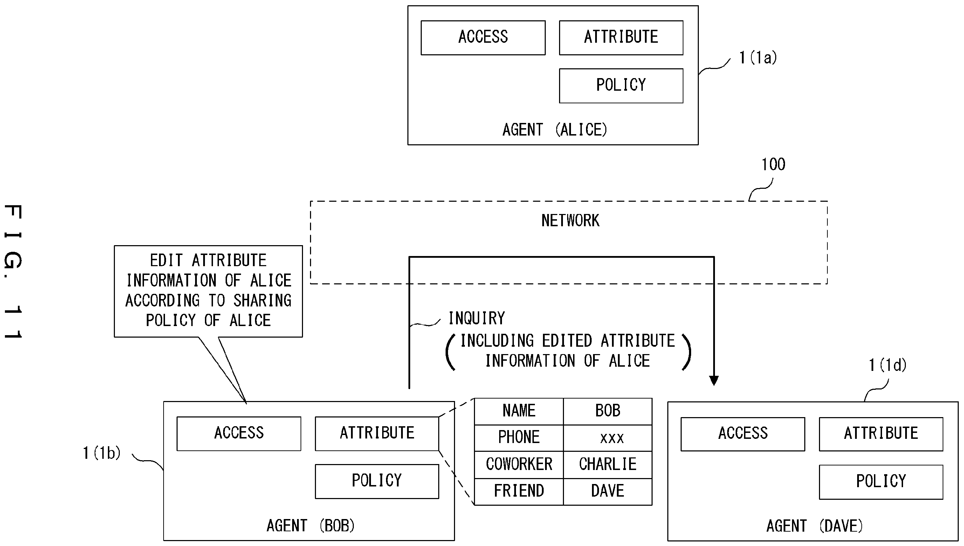

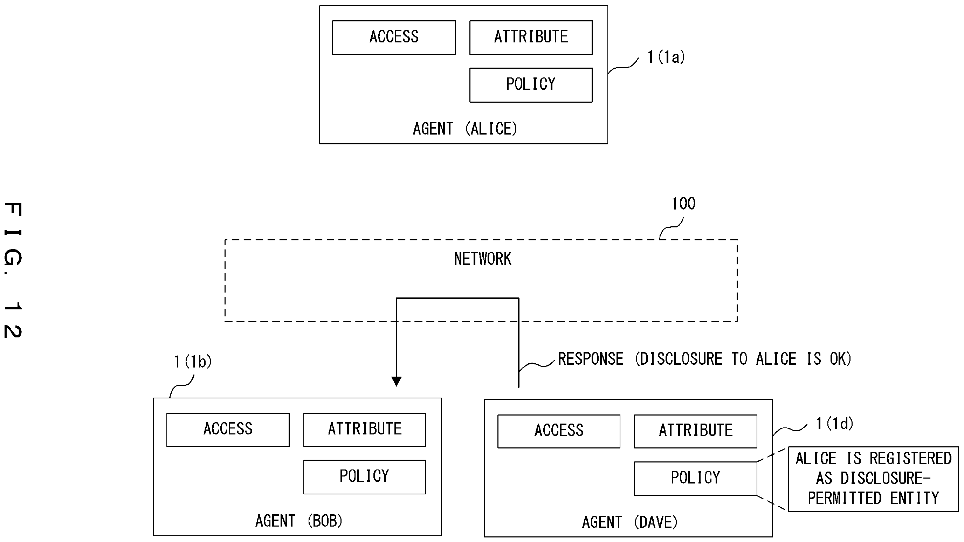

The inquiry phase and the response phase described above are executed for each of the related party. For example, the agent 1b performs the inquiry with Dave as illustrated in FIG.11. At this time, as illustrated in FIG. 12, "Alice" is registered as an entity to which the attributed information of Dave is permitted to be disclosed in the policy information of Dave managed by the agent 1d corresponding to Dave. Therefore, the agent 1d creates a response that indicates that the attribute information of Dave is permitted to be disclosed to Alice and transmits it to the agent 1b.

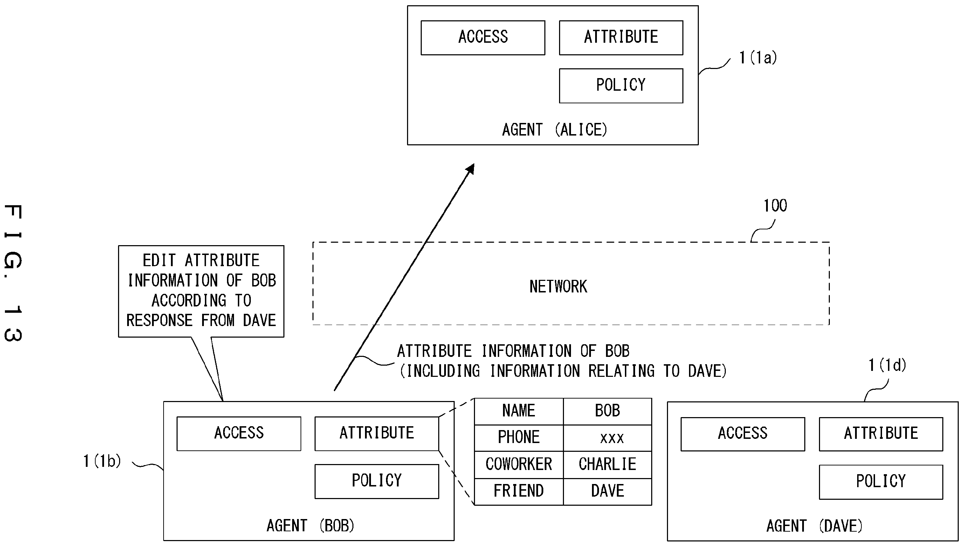

Then, the agent 1b edits the attribute information of Bob according to Dave's policy. For example, in the attribute information of Bob, Dave is Bob's friend. Here, Dave permits the inquiry from Bob. In this case, the agent 1b does not delete the information relating to Dave from the attribute information of Bob. Then, as illustrated in FIG. 13, the attribute information of Bob transmitted from the agent 1b to the agent 1a includes the information relating to Dave (that is, "Friend: Dave").

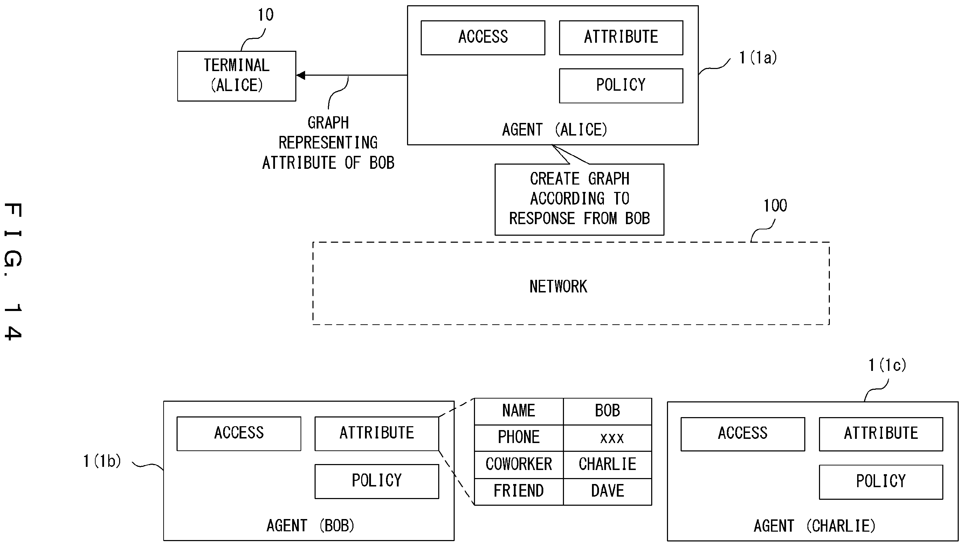

FIG.14 illustrates an example of the display phase of the method for processing attribute information. The display phase starts when the agent 1a receives response from the agent 1b.

The agent 1a creates a graph of the target party according to the response received from the agent 1b. That is, the agent 1a creates a graph that represents the attributes of Bob, according to the attribute information of Bob. Here, the attribute information of Bob that the agent 1a receives has been edited according to the policy of the related party. Specifically, in the attribute information of Bob, the information relating to Charlie has been deleted. Therefore, in the graph created by the agent 1a, Charlie does not exist. Then, the agent 1a transmits the created graph to the terminal device 10 used by Alice. The terminal device 10 displays the graph received from the agent 1a on the display device.

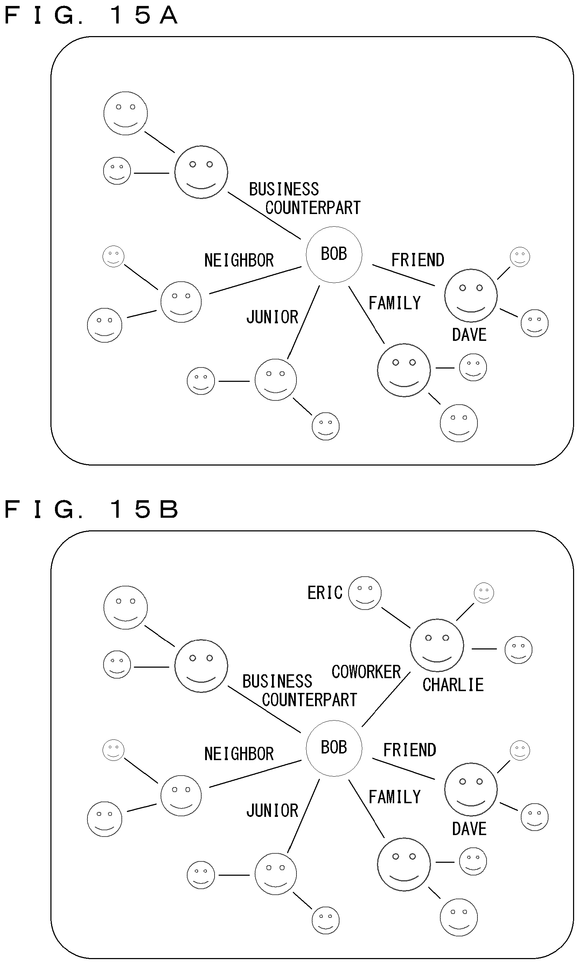

FIG.15A and FIG.15B illustrate an example of the graph displayed on the terminal device used by Alice. The graph is created according to the attribute information of the target party (that is, Bob).

The graph includes nodes and edges. The nodes respectively represent an entity. Specifically, the respective nodes represent the target party and the related party of the target party. Meanwhile, an edge represents the state in which there is a relationship between nodes. Specifically, the attribute value in the attribute information represents the state that indicates the identifier of another entity. For example, in the example illustrated in FIG.5B, the attribute value corresponding to "Friend" is "Dave". Therefore, an edge is provided between the node representing Bob and the node representing Dave. In addition, a label representing the corresponding attribute name (Friend, Family, Business counterpart, etc.) is given to the respective edges.

The sizes of the respective nodes may be uniform, but in this example, the sizes are decided according to the credibility score. The credibility score increases or decreases according to the number of attribute values with the attribute name "Credible". For example, in a case in which the number of attribute values with the attribute name "Credible" is i and the number of attribute values "Bob" among them is j as a result of the check of the attribute information held by all the agents, the credibility score of Bob is "j/i". However, this is an example, and the credibility score may be calculated in any other methods.

Note that FIG.15A illustrates a display example of a graph created in the procedures presented in FIG.3 or FIG.7 through FIG.14. In the examples presented in FIG.3 or FIG.7 through FIG.14, Alice is not registered as the disclosure-permitted party of the personal information of Charlie, in the policy information of Charlie. That is, Charlie does not want his own personal information to be disclosed to Alice. As a result, the personal information of Charlie is not disclosed from the agent 1b to the agent 1a, and the information relating to Charlie is not displayed on the terminal device 10 of Alice.

Meanwhile, FIG.15B illustrates a display example of a graph created in the procedures illustrated in FIG.2. In the example illustrated in FIG.2, the agent 1b transmits the attribute information of Bob including the information relating to Charlie to the agent 1a without obtaining Charlie's permission. As a result, the information relating to Charlie is displayed on the terminal device 10 of Alice.

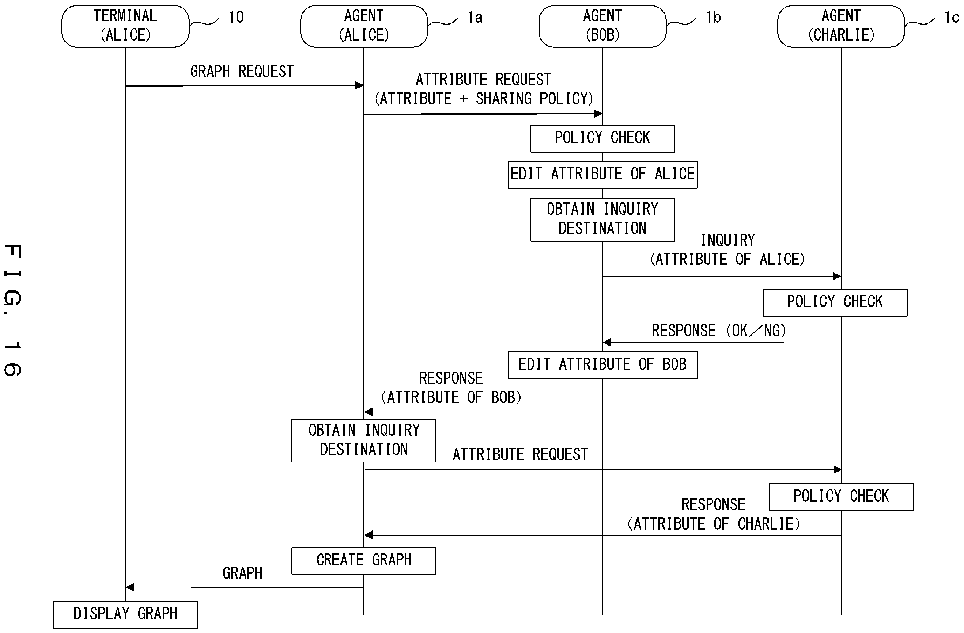

FIG.16 illustrates an example of the sequence of the method for processing attribute information. The sequence corresponds to the example illustrated in FIG.7 through FIG.10.

The terminal device 10 transmits a graph request to the agent 1a. In response to the graph request, the agent 1a transmits an attribute request to the agent 1b. The attribute request includes the attribute information and shared policy information of Alice.

The agent 1b decides whether or not to accept the received attribute request, according to Bob's policy. When accepting the received attribute request, the agent 1b decides whether or not the attribute information of Bob includes information relating to a third party. Here, the attribute information of Bob includes information relating to Charlie. In this case, the agent 1b obtains the inquiry destination of Charlie using the access table 24. Here, the agent 1c corresponding to Charlie is identified as the inquiry destination of Charlie. Meanwhile, the agent 1b edits the attribute information of Alice according to Alice's policy. Then, the agent 1b performs an inquiry with the agent 1c. The inquiry message includes the edited attribute information of Alice.

The agent 1c decides whether or not to permit the disclosure of the personal information of Charlie to Alice, according to Charlie's policy. Then, the agent 1c responds to the agent 1b with the decision result. In this example, it is assumed that the disclosure of the personal information of Charlie to Alice is permitted.

The agent 1b edits the attribute information of Bob according to the response received from the agent 1c. That is, a response for Alice is created. Then, the agent 1b transmits the edited attribute information of Bob to the agent 1a. At this time, since the disclosure of the personal information of Charlie to Alice is permitted, the edited attribute information of Bob includes the information relating to Charlie.

Upon recognizing that the attribute information of Bob includes information relating to Charlie, the agent 1a obtains the inquiry destination of Charlie. Here, the agent 1c corresponding to Charlie is identified as the inquiry destination of Charlie. Then, the agent 1a transmits an attribute request to the agent 1c. Then, after performing a policy check, the agent 1c transmits the attribute information of Charlie to the agent 1a.

The agent 1a creates a graph using the collected attribute information. In this example, the graph is created according to the attribute information of Bob received from the agent 1b and the attribute information of Charlie received from the agent 1c. Then, the agent 1a transmits the create graph to the terminal device 10. As a result, a graph representing the personal relationship of Bob is displayed on the display device of the terminal device 10.

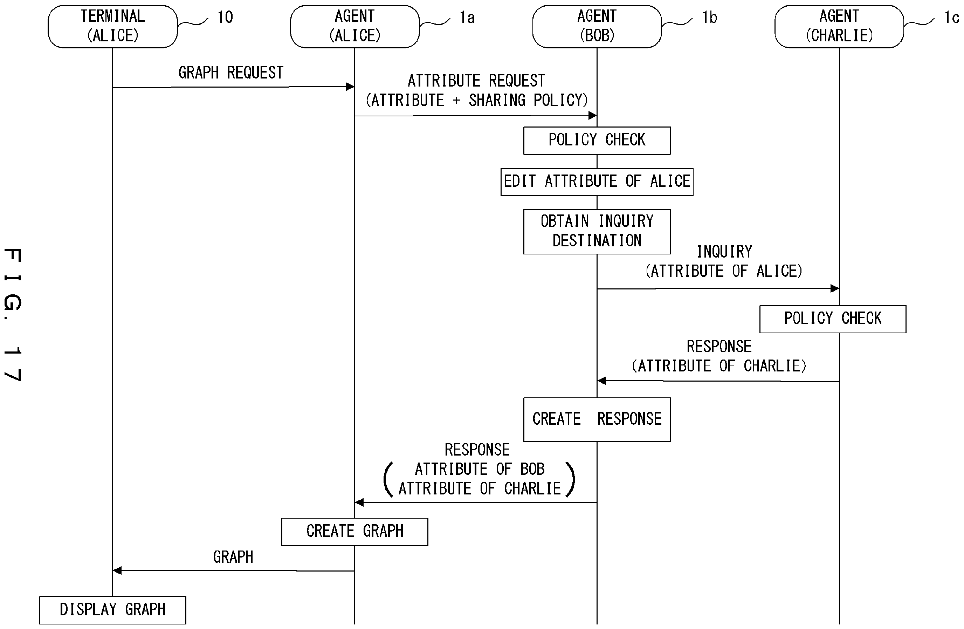

FIG.17 illustrates another example of the sequence of the method for processing attribute information. In the sequence illustrated in FIG.16, the agent 1c corresponding to the related party (that is, Charlie) transmits a response representing whether or not to permit the disclosure to the agent 1b. Meanwhile, in the sequence illustrated in FIG.17, the agent 1c transmits the attribute information of Charlie to the agent 1b in the case in which the attribute information of Charlie is permitted to be disclosed to Alice. At this time, the agent 1c may transmit, to the agent 1b, the policy information that represents Charlie's policy in addition to the attribute information of Charlie, as needed.

Then, the agent 1b creates a response that includes the attribute information of Bob and the attribute information of Charlie. At this time, the agent 1b may edit the attribute information of Bob and/or the attribute information of Charlie, as needed. For example, when the policy information of Charlie refuses the disclosure of a part of attributes in the plurality of attributes included in the attribute information of Charlie, the agent 1b deletes the refused attributes from the attribute information of Charlie. Then, the agent 1b transmits the response to the agent 1a.

The agent 1a creates the graph according to the response from the agent 1b. Meanwhile, unlike the sequence illustrated in FIG.16, the agent 1a obtains the attribute information of Charlie from the agent 1b. Therefore, the agent 1a does not need to transmit an attribute request to the agent 1c to obtain the attribute information of Charlie.

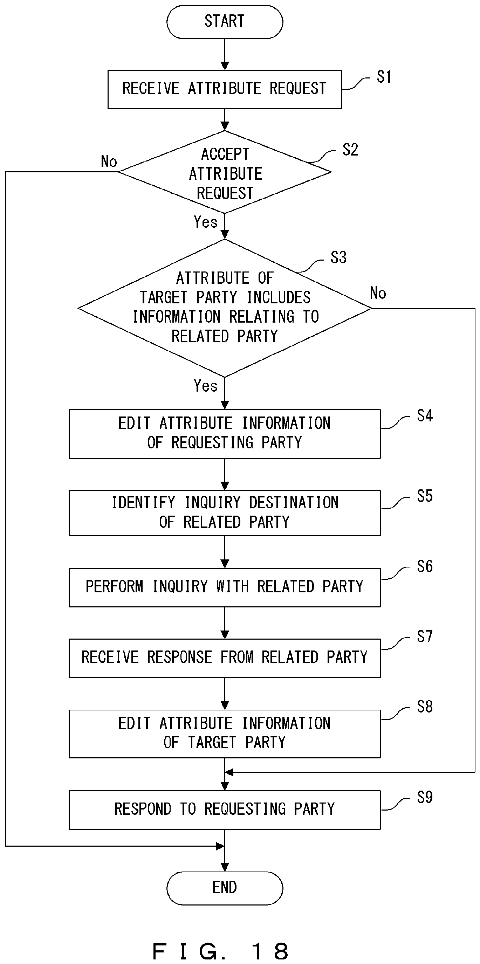

FIG.18 is a flowchart illustrating an example of the processing of an agent. Meanwhile, the processing in this flowchart is executed by an agent that receives an attribute request from another agent. In the example described above, the processing in the flowchart is executed by the agent 1b corresponding to the target party (that is, Bob).

In S1, the agent receives an attribute request from the agent corresponding to the requesting party. The attribute request includes the attribute information and the sharing policy information of the requesting party. In S2, the agent decides whether or not to accept the received attribute request, according to the policy of the target party. For example, when the requesting party is registered in the policy information of the target party, the agent accepts the received attribute request.

In S3, the agent decides whether or not the attribute information of the target party includes information relating to a third party. In the description below, the third party may be referred to as a "related party". When the attribute information of the target party includes information relating to a related party, the agent edits the attribute information of the requesting party according to the sharing policy of the requesting party in S4. In S5, the agent identifies the inquiry destination of the related party by referring to the access table. In this example, the inquiry destination of the related party corresponds to the address of the agent corresponding to the related party.

In S6, the agent inquiries the related party whether or not the personal information of the related party is permitted to be disclosed to the requesting party. At this time, the agent transmits the attribute information of the requesting party edited in S4 to the related party. After that, the agent waits for a response from the related party.

In S7, the agent receives a response from the related party. The response represents the policy of the relate party, for example. That is, the response indicates whether or not the personal information of the related party is permitted to be disclosed to the requesting party. In S8, the agent edits the attribute information of the target party, according to the policy of the related party. For example, when the related party does not permit the disclosure of the personal information of the related party to the requesting person, the agent deletes the information relating to the related party from the attribute information of the target party.

In S9, the agent performs a response to the requesting party. At this time, the attribute information of the target party is transmitted to the requesting party. Here, when S4 through S8 have been executed, the attribute information of the target party edited according to the policy of the related party is transmitted to the requesting party. Meanwhile, when not accepting the received attribute request (S2: No), the agent may transmit a message representing that the attribute information is not to be provided.

### Variation 1

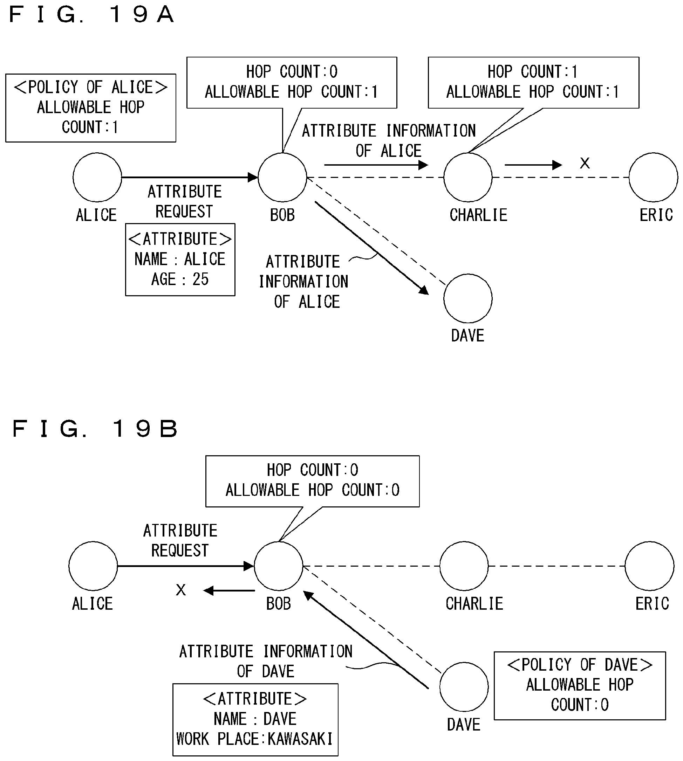

FIG.19A and FIG.19B illustrate an example of a method for limiting the disclosure range. In this example, the disclosure range of the attribute information of each entity is expressed by the hop count. That is, the agent corresponding to each entity holds, as the policy information, the allowable hop count that represents the number of hops across which the attribute information of the corresponding entity is permitted to be forwarded.

The hop count represents the number of hops between entities. For example, in the example illustrated in FIGs.19A and 19B, Charlie is Bob's coworker. That is, Charlie is directly relate to Bob. Therefore, the hop count between Charlie and Bob is 1. Meanwhile, Eric is Charlie's friend. Therefore, Eric is directly related to Charlie. Therefore, the hop count between Charlie and Eric is 1. However, Eric is not directly related to Bob. That is, Eric is related to Bob via Charlie. Therefore, the hop count between Bob and Eric is 2. Meanwhile, in the descriptions below, it is assumed that Alice, Bob, Charlie, Dave, Eric represent the agent corresponding Alice, the agent corresponding to Bob, the agent corresponding to Charlie, the agent corresponding to Dave, and the agent corresponding to Eric, respectively.

In the variation 1, when the attribute information of an entity is distributed, the "allowable hop count" and the "current hop count" are transmitted together with the attribute information. The allowable hop count defines the disclosure range of the attribute information of each entity as described above and represents the number of hops across which the attribute information of the corresponding entity is permitted to be forwarded. The current hop count represents how many times the attribute information has been forwarded. That is, the current hop count is incremented by 1 by each agent on the route on which the attribute information is forwarded. Then, when each agent receives the attribute information from another agent, each agent decides whether or not the attribute information can be forwarded, by comparing the allowable hop count and the current hop count.

In the example illustrated in FIG.19A, Alice transmits an attribute request to Bob. The attribute request includes the attribute information and the policy information of Alice. Here, in the policy information of Alice, "Allowable hop count=1" is defined. In this case, the forwarding of the attribute information of Alice is limited within the range of one hop from the receiving node (that is, Bob) of the attribute request.

Upon receiving the attribute request from Alice, Bob initializes the "current hop count" indicating the hop count of the attribute information of Alice to zero. At this time, "Current hop count: 0" is smaller than "Allowable hop count: 1". In this case, Bob decides that the attribute information of Alice can be forwarded. Then, in the inquiry phase, Bob transmits the attribute information of Alice to Charlie and Dave. At this time, "Current hop count: 0" and "Allowable hop count: 1" are also transmitted together with the attribute information of Alice. Meanwhile, the attribute information, the current hop count, and the allowable hop count may be transmitted to the destination agent, or they may be transmitted to a server that is referenceable from the destination agent.

In the inquiry phase, Charlie receives the attribute information of Alice from Bob. Then, Charlie increments "Current hop count" from 0 to 1. Then, Charlie compares "Current hop count" and "Allowable hop count". At this time, "Current hop count: 1" is equal to "Allowable hop count: 1". In this case, Charlie decides that it is not permitted to forward the attribute information of Alice. That is, the attribute information of Alice is not forwarded to Eric.

In the example illustrated in FIG.19B, Dave accepts the inquiry from Bob. In this example, in response to the inquiry from Bob, Dave transmits the attribute information and the policy information of Dave to Bob. However, "Allowable hop count=0" is defined in the policy information of Dave. In this case, the forwarding of the attribute information of Dave is not permitted.

That is, upon receiving the attribute information from Dave, Bob initializes "Current hop count" representing the hop count of the attribute information of Dave to zero. Then, Bob compares "Current hop count" and "Allowable hop count". At this time, "Current hop count: 0" is equal to "Allowable hop count: 0". In this case, Bob decides that it is not permitted to forward the attribute information of Dave. Therefore, the attribute information of Dave is not forwarded to Alice.

As described above, in the variation 1, the forwarding range of the attribute information of each entity is defined as the allowable hop count. Therefore, each entity is able to decide the range in which its own attribute information is distributed.

### Variation 2

When attribute information received from another entity includes information relating to a third party (hereinafter, referred to as "related information"), each entity may want to decide whether or not the disclosure of the related information is permitted by the third party. For example, in FIG.2, Alice obtains the attribute information of Bob. The attribute information includes information that indicates that "Charlie is Bob's coworker". However, it is not possible for Alice to decide whether Charlie is really Bob's coworker, with this information only. Therefore, in the variation 2, a function is provided for determining whether or not the disclosure of information relating to a third party has been permitted by the third party. That is, the variation 2 provides a function for detecting an unpermitted disclosure of attribute information.

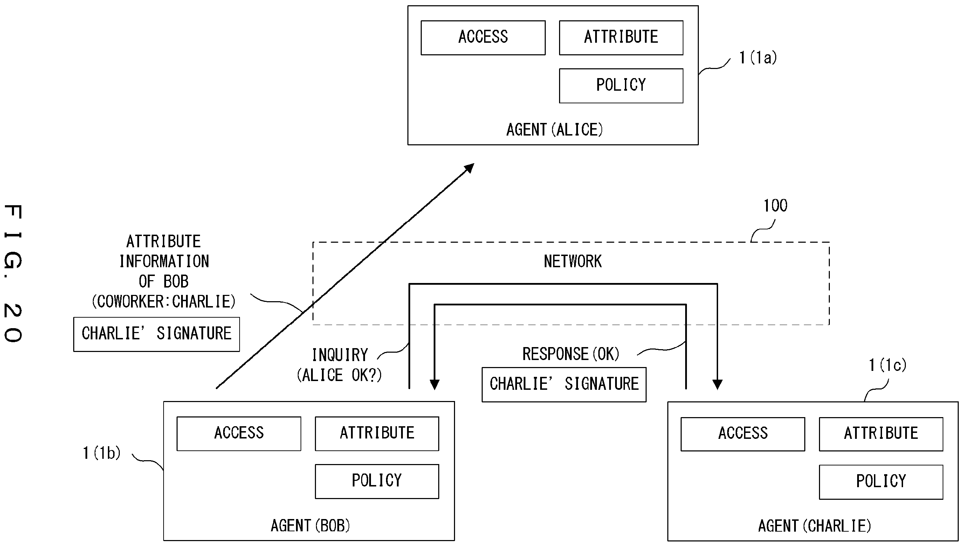

FIG.20 illustrates an example of a method for detecting an unpermitted disclosure of attribute information. In this example, the agent 1b corresponding to Bob receives an attribute information from the agent 1a corresponding to Alice. Here, the attribute information of Bob includes information relating to Charlie, and therefore, the agent 1b performs an inquiry with the agent 1c corresponding to Charlie.

The agent 1c decides whether or not the attribute information of Charlie is permitted to be disclosed to Alice, according to Charlie's policy. Here, it is assumed that the disclosure of the attribute information of Charlie to Alice is permitted. In this case, the agent 1c transmits Charlie's "Signature" to the agent 1b or a server that is referenceable from the agent 1b. The signature indicates that Charlie (or Charlie's agent) has confirmed the inquiry from the agent 1b. Then, when responding to the attribute request from Alice, the agent 1b transmits the attribute information of Bob together with Charlie's signature to the agent 1a or a server that is referenceable from the agent 1a.

The agent 1a receives the signature of Charlie together with the attribute information of Bob. Therefore, Alice is able to decide that the information relating to Charlie received from Bob has been disclosed with Charlie's permission. In the example illustrated in FIG.20, Alice is able to decide that Charlie is really Bob's coworker. Therefore, according to the variation 2, the credibility of the disclosed attribute information is improved.

Meanwhile, in the example illustrated in FIG.20, it is preferable for the agent 1c to create the signature of Charlie using a cipher based on the information relating to Alice. For example, when the attribute information of Alice is to be forwarded to the Agent 1c via the agent 1b, the agent 1c may create the signature of Charlie by a cryptographic procedure using the attribute information of Alice or a part of it.

### Variation 3

When obtaining attribute information of a specified entity, an agent performs an inquiry with the specified agent. However, when there is a large number of entities, an agent may receive many inquiries. In this case, the response of the agent may become slow. Therefore, the variation 3 provides a function for alleviating the problem.

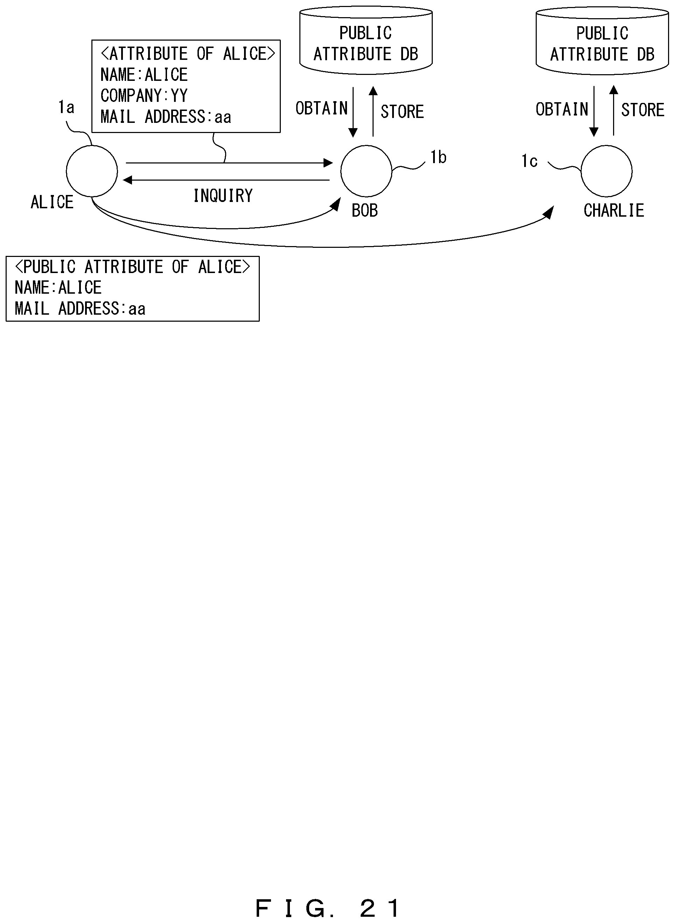

FIG.21 illustrates an example of a method for making attribute information public. In this example, the attribute information of Alice is made public.

The agent 1a corresponding to Alice transmits a part of attributes in a plurality of attributes included in the attribute information of Alice to other agents in advance. In the example illustrated in FIG.21, Alice's name and e-mail address are transmitted to the agents 1b, 1c. Then, each of the agents 1b, 1c stores the received information in a corresponding public attribute database.

After that, the agents 1b, 1c are able to obtain a part of the attribute information of Alice only by accessing the corresponding public attribute database, without performing an inquiry with the agent 1a. Meanwhile, when the agents 1b, 1c want to check whether the information stored in the public attribute database is correct, they may perform an inquiry with the agent 1a. In this case, the agents 1b, 1c are able to check whether or not the information stored in the public attribute database is correct, by comparing the information stored in the public attribute database and information obtained by the inquiry.

### Variation 4

In the variation 3, the attribute information is made public. By contrast, in the variation 4, the policy information is made public. For example, it is assumed that the policy information of Charlie has been distributed to each agent in advance. In this case, when the agent 1b receives an attribute request presented in FIG.7 from the agent 1a, the agent 1b is able to decide whether or not the information relating to Charlie may be disclosed to Alice, without performing an inquiry with the agent 1c. That is, the agent 1b is able to edit the attribute information of Bob according to Charlie's policy, without performing an inquiry with the agent 1c.

### Hardware configuration

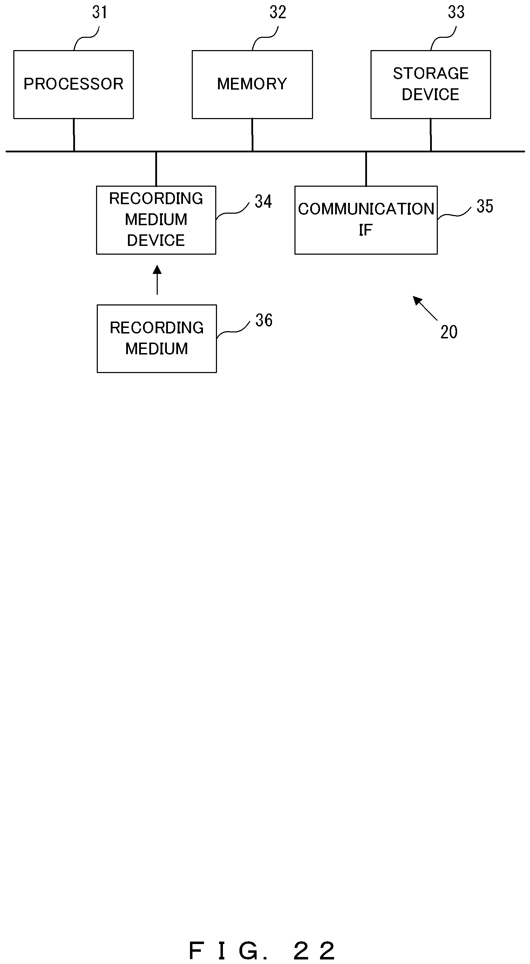

FIG.22 illustrates an example of the hardware configuration of an information processing device 20. The information processing device 20 is equipped with a processor 31, a memory 32, a storage device 33, a recording medium device 34, and a communication IF 35. Meanwhile, the information processing device 20 may also be equipped with other elements or functions that are not illustrated in FIG.22.

The processor 31 provides functions of the agent 1 by executing a program for processing attribute information stored in the storage device 33. The program for processing attribute information describes, for example, the processes in the flowchart illustrated in FIG.18. Therefore, the agent 1 is realized with the processor 31 executing the program for processing attribute information. The memory 32 is used as a work area of the processor 31. In addition, the attribute information 22 and the policy information 23, and the access table 24 of an entity corresponding to an agent operating on the information processing device 20 are stored in the storage device 33 or the memory 32.

The recording medium device 34 is able to read out information or data recorded in a removable recording medium 36. Meanwhile, the program for processing attribute information may also be given from the removable recording medium 36 to the information processing device 20. The communication IF 35 provides an interface for connecting to the network 100. Meanwhile, the program for processing attribute information may be given from a program server connecting to the network 100 to the information processing device 20.

## Claims

1. A program for processing attribute information for causing a processor (31) to execute a process that realizes a first agent (1b) corresponding to a first entity (Bob) in a communication system in which a plurality of agents (1a-1c) respectively manage corresponding entities (Alice, Bob, Charlie), the process comprising:
deciding whether first attribute information (22) that indicates an attribute of the first entity includes information relating to a third entity (Charlie) when the first agent receives an attribute request from a second agent (1a) corresponding to a second entity (Alice); **characterised in that** the process comprises
editing the first attribute information based on a policy of the third entity with respect to a disclosure of the information relating to the third entity when the first attribute information includes the information relating to the third entity; and
transmitting the edited first attribute information to the second agent.

2. The program according to claim 1, wherein
the first agent
performs an inquiry with a third agent corresponding to the third entity as to whether or not the information relating to the third entity is permitted to be disclosed to the second entity; and
edits the first attribute information based on a response to the inquiry from the third agent and transmits the edited first attribute information to the second agent.

3. The program according to claim 2, wherein
when the response to the inquiry from the third agent does not permit the disclosure of the information relating to the third entity, the first agent deletes the information relating to the third entity from the first attribute information and transmits the first attribute information to the second agent.

4. The program according to claim 2, wherein
the attribute request includes second attribute information that indicates an attribute of the second entity and policy information that indicates a disclosure range of the second attribute information, wherein
the first agent
edits the second attribute information based on the policy information; and
transmits the edited second attribute information to the third agent in the inquiry.

5. An information processing device (20) configured to provide a function of a first agent (1b) corresponding to a first entity (Bob) in a communication system in which a plurality of agents (1a-1c) respectively manage attribute information of corresponding entities (Alice, Bob, Charlie), the information processing device comprising:
a processor (31); and
a memory (32, 33) configured to store attribute information that indicates an attribute of the first entity,
wherein the processor (31)
is configured to decide whether the attribute information includes information relating to a third entity (Charlie) when the information processing device receives an attribute request from a second agent (1a) corresponding to a second entity (Alice); **characterised in that** the processor Z
is configured to edit the attribute information based on a policy of the third entity with respect to a disclosure of the information relating to the third entity when the attribute information includes the information relating to the third entity; and
is configured to transmit the edited attribute information to the second agent.

6. A communication system comprising a plurality of agents (1a-1c) respectively corresponding to a plurality of entities (Alice, Bob, Charlie) and configured to connect to a network,
wherein
a first agent (1b) of the plurality of agents corresponding to a first entity (Bob)
is configured to decide whether first attribute information that indicates an attribute of the first entity includes information relating to a third entity (Charlie) when the first agent receives an attribute request from a second agent (1a) corresponding to a second entity (Alice), **characterised in that**
the first agent is configured to edit the first attribute information based on a policy of the third entity with respect to a disclosure of the information relating to the third entity when the first attribute information includes the information relating to the third entity, and
the first agent is configured to transmit the edited first attribute information to the second agent.

7. The communication system according to claim 6, wherein
the first agent is configured to perform an inquiry with a third agent corresponding to the third entity as to whether or not the information relating to the third entity is permitted to be disclosed to the second entity;
the third agent is configured to decide whether or not the information relating to the third entity is permitted to be disclosed to the second entity based on the policy of the third entity and transmits a response that indicates a decision result to the first agent; and
the first agent is configured to edit the first attribute information based on the response and transmits the edited first attribute information to the second agent.

8. The communication system according to claim 7, wherein
the second agent is configured to request, when the first attribute information received from the first agent includes the information relating to the third entity, from the third entity, third attribute information that indicates an attribute of the third entity.

9. The communication system according to claim 7, wherein
the third entity is configured to create, when disclosing the information relating to the third entity to the second entity, a signature of the third entity based on a content of the inquiry and transmits the signature to the first agent, and
the first agent is configured to transmit the first attribute information and the signature to the second agent.

10. The communication system according to claim 6, wherein
the first agent is configured to perform an inquiry with a third agent corresponding to the third entity as to whether or not the information relating to the third entity is permitted to be disclosed to the second entity;
the third agent is configured to decide whether or not the information relating to the third entity is permitted to be disclosed to the second entity based on the policy of the third entity;
the third entity is configured to transmit, when disclosing the information relating to the third entity to the second entity, third attribute information that indicates an attribute of the third entity to the first agent; and
the first agent is configured to transmit the first attribute information and the third attribute information to the second agent.

11. The communication system according to claim 6, wherein
each of the agents manages attribute information that indicates an attribute of a corresponding entity and policy information that indicates a range in which the attribute information is disclosed; and
the policy information includes an allowable hop count that indicates an allowable forwarding range of the attribute information.

## Patentansprüche

1. Programm zur Verarbeitung von Attributinformationen zum Veranlassen eines Prozessors (31), einen Prozess auszuführen, der einen ersten Agenten (1b) entsprechend einer ersten Instanz (Bob) in einem Kommunikationssystem umsetzt, in dem eine Vielzahl von Agenten (1a-1c) jeweils entsprechende Instanzen (Alice, Bob, Charlie) verwalten, wobei der Prozess umfasst:
Entscheiden, ob erste Attributinformationen (22), die ein Attribut der ersten Instanz angeben, Informationen bezüglich einer dritten Instanz (Charlie) beinhalten, wenn der erste Agent eine Attributanfrage von einem zweiten Agenten (1a) entsprechend einer zweiten Instanz (Alice) empfängt;
**dadurch gekennzeichnet, dass** der Prozess umfasst
Bearbeiten der ersten Attributinformationen basierend auf einer Richtlinie der dritten Instanz in Bezug auf eine Offenbarung der Informationen bezüglich der dritten Instanz, wenn die ersten Attributinformationen die Informationen bezüglich der dritten Instanz beinhalten; und
Übertragen der bearbeiteten ersten Attributinformationen an den zweiten Agenten.

2. Programm nach Anspruch 1, wobei
der erste Agent
eine Anfrage mit einem dritten Agenten entsprechend der dritten Instanz durchführt, ob oder ob nicht die Informationen bezüglich der dritten Instanz zugelassen sind, der zweiten Instanz offenbart zu werden; und
die ersten Attributinformationen basierend auf einer Antwort auf die Anfrage von dem dritten Agenten bearbeitet und die bearbeiteten ersten Attributinformationen an den zweiten Agenten überträgt.

3. Programm nach Anspruch 2, wobei
wenn die Antwort auf die Anfrage von dem dritten Agenten die Offenbarung der Informationen bezüglich der dritten Instanz nicht zulässt, der erste Agent die Informationen bezüglich der dritten Instanz von den ersten Attributinformationen löscht und die ersten Attributinformationen an den zweiten Agenten überträgt.

4. Programm nach Anspruch 2, wobei
die Attributanfrage zweite Attributinformationen, die ein Attribut der zweiten Instanz angeben, und Richtlinieninformationen, die einen Offenbarungsumfang der zweiten Attributinformationen angeben, beinhaltet, wobei
der erste Agent
die zweiten Attributinformationen basierend auf den Richtlinieninformationen bearbeitet; und
die bearbeiteten zweiten Attributinformationen an den dritten Agenten in der Anfrage überträgt.

5. Informationsverarbeitungsvorrichtung (20), die konfiguriert ist, eine Funktion eines ersten Agenten (1b) entsprechend einer ersten Instanz (Bob) in einem Kommunikationssystem bereitzustellen, in dem eine Vielzahl von Agenten (1a-1c) jeweils Attributinformationen entsprechender Instanzen (Alice, Bob, Charlie) verwalten, wobei die Informationsverarbeitungsvorrichtung umfasst:
einen Prozessor (31); und
einen Speicher (32, 33), der konfiguriert ist, Attributinformationen zu speichern, die ein Attribut der ersten Instanz angeben,
wobei der Prozessor (31)
konfiguriert ist zu entscheiden, ob die Attributinformationen Informationen bezüglich einer dritten Instanz (Charlie) beinhalten, wenn die Informationsverarbeitungsvorrichtung eine Attributanfrage von einem zweiten Agenten (1a) entsprechend einer zweiten Instanz (Alice) empfängt;
**dadurch gekennzeichnet, dass** der Prozessor
konfiguriert ist, die Attributinformationen basierend auf einer Richtlinie der dritten Instanz in Bezug auf eine Offenbarung der Informationen bezüglich der dritten Instanz zu bearbeiten, wenn die Attributinformationen die Informationen bezüglich der dritten Instanz beinhalten; und
konfiguriert ist, die bearbeiteten Attributinformationen an den zweiten Agenten zu übertragen.

6. Kommunikationssystem, umfassend eine Vielzahl von Agenten (1a-1c), die jeweils einer Vielzahl von Instanzen (Alice, Bob, Charlie) entsprechen und konfiguriert sind, sich mit einem Netzwerk zu verbinden, wobei
ein erster Agent (1b) der Vielzahl von Agenten entsprechend einer ersten Instanz (Bob) konfiguriert ist, zu entscheiden, ob erste Attributinformationen, die ein Attribut der ersten Instanz angeben, Informationen bezüglich einer dritten Instanz (Charlie) beinhalten, wenn der erste Agent eine Attributanfrage von einem zweiten Agenten (1a) entsprechend einer zweiten Instanz (Alice) empfängt,
**dadurch gekennzeichnet, dass**
der erste Agent konfiguriert ist, die ersten Attributinformationen basierend auf einer Richtlinie der dritten Instanz in Bezug auf eine Offenbarung der Informationen bezüglich der dritten Instanz zu bearbeiten, wenn die ersten Attributinformationen die Informationen bezüglich der dritten Instanz beinhalten, und
der erste Agent konfiguriert ist, die bearbeiteten ersten Attributinformationen an den zweiten Agenten zu übertragen.

7. Kommunikationssystem nach Anspruch 6, wobei
der erste Agent konfiguriert ist, eine Anfrage mit einem dritten Agenten entsprechend der dritten Instanz durchzuführen, ob oder ob nicht die Informationen bezüglich der dritten Instanz zugelassen sind, der zweiten Instanz offenbart zu werden;
der dritte Agent konfiguriert ist, basierend auf der Richtlinie der dritten Instanz zu entscheiden, ob oder ob nicht die Informationen bezüglich der dritten Instanz zugelassen sind, der zweiten Instanz offenbart zu werden, und eine Antwort, die ein Entscheidungsergebnis angibt, an den ersten Agenten überträgt; und
der erste Agent konfiguriert ist, die ersten Attributinformationen basierend auf der Antwort zu bearbeiten und die bearbeiteten ersten Attributinformationen an den zweiten Agenten überträgt.

8. Kommunikationssystem nach Anspruch 7, wobei
der zweite Agent konfiguriert ist, wenn die ersten Attributinformationen, die von dem ersten Agenten empfangen werden, die Informationen bezüglich der dritten Instanz beinhalten, von der dritten Instanz dritte Attributinformationen anzufragen, die ein Attribut der dritten Instanz angeben.

9. Kommunikationssystem nach Anspruch 7, wobei
die dritte Instanz konfiguriert ist, wenn die Informationen bezüglich der dritten Instanz der zweiten Instanz offenbart werden, eine Signatur der dritten Instanz basierend auf einem Inhalt der Anfrage zu erzeugen und die Signatur an den ersten Agenten überträgt, und
der erste Agent konfiguriert ist, die ersten Attributinformationen und die Signatur an den zweiten Agenten zu übertragen.

10. Kommunikationssystem nach Anspruch 6, wobei
der erste Agent konfiguriert ist, eine Anfrage mit einem dritten Agenten entsprechend der dritten Instanz durchzuführen, ob oder ob nicht die Informationen bezüglich der dritten Instanz zugelassen sind, der zweiten Instanz offenbart zu werden;
der dritte Agent konfiguriert ist, basierend auf der Richtlinie der dritten Instanz zu entscheiden, ob oder ob nicht die Informationen bezüglich der dritten Instanz zugelassen sind, der zweiten Instanz offenbart zu werden;
die dritte Instanz konfiguriert ist, wenn die Informationen bezüglich der dritten Instanz der zweiten Instanz offenbart werden, dritte Attributinformationen, die ein Attribut der dritten Instanz angeben, an den ersten Agenten zu übertragen; und
der erste Agent konfiguriert ist, die ersten Attributinformationen und die dritten Attributinformationen an den zweiten Agenten zu übertragen.

11. Kommunikationssystem nach Anspruch 6, wobei
jeder der Agenten Attributinformationen, die ein Attribut einer entsprechenden Instanz angeben, und Richtlinieninformationen, die einen Umfang angeben, in dem die Attributinformationen offenbart werden, verwaltet; und
die Richtlinieninformationen eine zulässige Hop-Zahl beinhalten, die einen zulässigen Weiterleitungsumfang der Attributinformationen angibt.

## Revendications

1. Programme pour traiter des informations d'attribut pour amener un processeur (31) à exécuter un processus qui réalise un premier agent (1b) correspondant à une première entité (Bob) dans un système de communication dans lequel une pluralité d'agents (1a-1c) gèrent respectivement des entités correspondantes (Alice, Bob, Charlie), le processus comprenant les étapes consistant à :
décider si des premières informations d'attribut (22) qui indiquent un attribut de la première entité incluent ou non des informations se rapportant à une troisième entité (Charlie) lorsque le premier agent reçoit une demande d'attribut en provenance d'un deuxième agent (1a) correspondant à une deuxième entité (Alice) ; **caractérisé en ce que** le processus comprend les étapes consistant à
éditer les premières informations d'attribut sur la base d'une politique de la troisième entité par rapport à une divulgation des informations se rapportant à la troisième entité lorsque les premières informations d'attribut incluent les informations se rapportant à la troisième entité ; et
transmettre les premières informations d'attribut éditées au deuxième agent.

2. Programme selon la revendication 1, dans lequel
le premier agent
effectue une demande avec un troisième agent correspondant à la troisième entité pour savoir si les informations se rapportant à la troisième entité sont, ou non, autorisées à être divulguées à la deuxième entité ; et
édite les premières informations d'attribut sur la base d'une réponse à la demande provenant du troisième agent et transmet les premières informations d'attribut éditées au deuxième agent.

3. Programme selon la revendication 2, dans lequel
lorsque la réponse à la demande provenant du troisième agent ne permet pas la divulgation des informations se rapportant à la troisième entité, le premier agent supprime les informations se rapportant à la troisième entité des premières informations d'attribut et transmet les premières informations d'attribut au deuxième agent.

4. Programme selon la revendication 2, dans lequel
la demande d'attribut inclut des deuxièmes informations d'attribut qui indiquent un attribut de la deuxième entité et des informations de politique qui indiquent une plage de divulgation des deuxièmes informations d'attribut, dans lequel
le premier agent
édite les deuxièmes informations d'attribut sur la base des informations de politique ; et
transmet les deuxièmes informations d'attribut éditées au troisième agent dans la demande.

5. Dispositif de traitement d'informations (20) configuré pour traiter une fonction d'un premier agent (1b) correspondant à une première entité (Bob) dans un système de communication dans lequel une pluralité d'agents (1a-1c) gèrent respectivement des informations d'attribut d'entités correspondantes (Alice, Bob, Charlie), le dispositif de traitement d'informations comprenant :
un processeur (31) ; et
une mémoire (33, 33) configurée pour stocker des informations d'attribut qui indiquent un attribut de la première entité,
dans lequel le processeur (31)
est configuré pour décider si les premières informations d'attribut incluent des informations se rapportant à une troisième entité (Charlie) lorsque le dispositif de traitement d'informations reçoit une demande d'attribut en provenance d'un deuxième agent (1a) correspondant à une deuxième entité (Alice) ; **caractérisé en ce que** le processeur
est configuré pour éditer les informations d'attribut sur la base d'une politique de la troisième entité par rapport à une divulgation des informations se rapportant à la troisième entité lorsque les informations d'attribut incluent les informations se rapportant à la troisième entité ; et
est configuré pour transmettre les informations d'attribut éditées au deuxième agent.

6. Système de communication comprenant une pluralité d'agents (1a-1c) correspondant respectivement à une pluralité d'entités (Alice, Bob, Charlie) et configurés pour être connectés à un réseau,
dans lequel
un premier agent (1b) de la pluralité d'agents correspondant à une première entité (Bob) est configuré pour décider si des premières informations d'attribut qui indiquent un attribut de la première entité incluent ou non des informations se rapportant à une troisième entité (Charlie) lorsque le premier agent reçoit une demande d'attribut en provenance d'un deuxième agent (1a) correspondant à une deuxième entité (Alice), **caractérisé en ce que**
le premier agent est configuré pour éditer les premières informations d'attribut sur la base d'une politique de la troisième entité par rapport à une divulgation des informations se rapportant à la troisième entité lorsque les premières informations d'attribut incluent les informations se rapportant à la troisième entité, et
le premier agent est configuré pour transmettre les premières informations d'attribut éditées au deuxième agent.

7. Système de communication selon la revendication 6, dans lequel
le premier agent est configuré pour effectuer une demande avec un troisième agent correspondant à la troisième entité pour savoir si les informations se rapportant à la troisième entité sont, ou non, autorisées à être divulguées à la deuxième entité ;
le troisième agent est configuré pour décider si les informations se rapportant à la troisième entité sont, ou non, autorisées à être divulguées à la deuxième entité sur la base de la politique de la troisième entité et transmet une réponse qui indique un résultat de décision au premier agent ; et
le premier agent est configuré pour éditer les premières informations d'attribut sur la base de la réponse et transmet les premières informations d'attribut éditées au deuxième agent.

8. Système de communication selon la revendication 7, dans lequel
le deuxième agent est configuré pour demander, lorsque les premières informations d'attribut reçues du premier agent incluent les informations se rapportant à la troisième entité, en provenance de la troisième entité, des troisièmes informations d'attribut qui indiquent un attribut de la troisième entité.

9. Système de communication selon la revendication 7, dans lequel
la troisième entité est configurée pour créer, lors de la divulgation des informations se rapportant à la troisième entité à la deuxième entité, une signature de la troisième entité sur la base d'un contenu de la demande et transmet la signature au premier agent, et
le premier agent est configuré pour transmettre les premières informations d'attribut et la signature au deuxième agent.

10. Système de communication selon la revendication 6, dans lequel
le premier agent est configuré pour effectuer une demande avec un troisième agent correspondant à la troisième entité pour savoir si les informations se rapportant à la troisième entité sont, ou non, autorisées à être divulguées à la deuxième entité ;
le troisième agent est configuré pour décider si les informations se rapportant à la troisième entité sont, ou non, autorisées à être divulguées à la deuxième entité sur la base de la politique de la troisième entité ;
la troisième entité est configurée pour transmettre, lors de la divulgation des informations se rapportant à la troisième entité à la deuxième entité, des troisièmes informations d'attribut qui indiquent un attribut de la troisième entité au premier agent ; et
le premier agent est configuré pour transmettre les premières informations d'attribut et les troisièmes informations d'attribut au deuxième agent.

11. Système de communication selon la revendication 6, dans lequel
chacun des agents gère des informations d'attribut qui indiquent un attribut d'une entité correspondante et des informations de politique qui indiquent une plage dans laquelle les informations d'attribut sont divulguées ; et
les informations de politique incluent un compte de sauts admissible qui indique une plage d'expédition admissible des informations d'attribut.
